# EUROPÄISCHE PATENTANMELDUNG

(11) **EP 2 995 692 A1**
(43) Veröffentlichungstag der Anmeldung: **16.03.2016**
(21) Anmeldenummer: 15177595.4
(22) Anmeldetag: 21.07.2015
(51) Int. Cl.: C22B 3/06, C22B 3/10, C22B 59/00

(54) **VERFAHREN ZUM AUFSCHLIESSEN EINES EUDIALYTMINERALS**

(30) Priorität: 12.09.2014 DE 102014218346
(71) Anmelder: Siemens Aktiengesellschaft, 80333 München (DE)
(72) Erfinder: Friedrich, Bernd, 52074 Aachen (DE); Hanebuth, Marc, 90482 Nürnberg (DE); Kruse, Stephanie, 52070 Aachen (DE); Tremel, Alexander, 91052 Erlangen (DE); Voßenkaul, Daniel, 52064 Aachen (DE)

(57) **Zusammenfassung**

Die Erfindung betrifft ein Verfahren zum Aufschließen eines Eudialytminerals. Dieses umfasst folgende Schritte: Gegebenenfalls Mahlen des Minerals, Versetzten des gemahlen Eudialyts mit einer flüssigen Mineralsäure, so dass eine Masse entsteht, Einwirken der Masse für eine vorgegebene Zeit und anschließendes Laugen der Masse mit einem Laugungsmittel und Trennen eines verbleibenden Feststoffes vom Laugungsmittel.

## Beschreibung

Die Erfindung betrifft ein Verfahren zum Aufschließen eines Eudialytminerals nach Patentanspruch 1.

Eudialyt wurde 1819 erstmalig beschrieben. Der Grundbaustein des Eudialyts besteht aus einem natrium- und zirkoniumhaltigen Ringsilikat mit variierenden Gehalten der Substitutionselemente Calcium, Eisen, Mangan, Strontium, Niob, Kalium, Titan, Wolfram sowie Selten-Erdelemente (SEE). Die Gehalte der SEE bewegen sich in den Erzen im Bereich von 0,1 bis 3 Gew.% und zeichnen sich besonders durch den relativ hohen Gehalt an den wertvollen Schweren-Selten-Erdelementen aus. Die Gehalte der radioaktiven Elemente Thorium und Uran sind relativ gering, weswegen sich Eudialyt grundsätzlich auch gut als Quelle zur Gewinnung von Selten-Erdelementen eignet.

Im Zuge der hydrometallurgischen Verarbeitung, also beim Aufschließen von Eudialyt, kommt es nach der Laugung mit gängigen Mineralsäuren zur sogenannten Kieselgelbildung. Diese Kieselgelbildung bewirkt, dass die wässrige Phase abhängig von unterschiedlichen Einflussparametern wie Zeit, Temperatur, Säure- und Siliziumkonzentration zu gelieren beginnt und sich die Viskosität drastisch erhöht. In Extremfällen kann dies zu einem festen Gel führen, welches für eine weitere hydrometallurgische Verarbeitung schwer und teilweise gar nicht zugänglich ist.

Die Gelbildung wird durch gelöstes Silizium hervorgerufen, wobei Silizium in wässrigem Medium eine relativ geringe Löslichkeit besitzt. Der metastabile Zustand der Monokieselsäure direkt nach der Laugung führt bereits nach wenigen Minuten über sogenannte Kondensationsreaktionen unter Abspaltung von Wasser zur Bildung von Dikieselsäure (H₆Si₂O₇). Das dabei abgespaltene Wasser ist ein Produkt der gebundenen Hydroxygruppe. Durch weitere Kondensationsreaktionen der Kieselsäure können im Übergangszustand Komplexe wie Trikieselsäuren bis hin zu Polykieselsäuren gebildet werden. Diese Polymerisation der Kieselsäure bewirkt über Sauerstoffbrücken die bereits beschriebene Vergelung des wässrigen Mediums.

Die Aufgabe der Erfindung besteht darin, ein Verfahren bereitzustellen, das dazu geeignet ist, Eudialyt aufzuschließen und dabei die Gelbildung beim Aufschlussverfahren, insbesondere bei Laugungsprozessschritten, zu reduzieren oder vollständig zu verhindern.

Die Lösung der Aufgabe besteht in einem Verfahren zum Aufschließen eines Eudialytminerals mit den Merkmalen des Patentanspruches 1. Unter dem Begriff Eudialytmineral wird im Weiteren sowohl ein Erz, das Eudialyt enthält als auch Eudialyt-Konzentrat verstanden.

Das erfindungsgemäße Verfahren zum Aufschließen des Eudialytminerals umfasst folgende Schritte: Zunächst wird das Mineral mit flüssiger Mineralsäure versetzt, so dass eine Masse mit flüssigen und festen Phasenbestandteilen entsteht. Es wird also so viel an flüssiger Mineralsäure zugegeben, dass das pulvrige Mineral in der Art angefeuchtet wird, dass im Wesentlichen alle Pulverkörner mit der Säure benetzt werden, aber nicht wie in Form einer Suspension aufgeschlämmt werden. Anschließend erfolgt ein Einwirken der Masse für eine vorgegebene Zeit, die abhängig von der Temperatur und der Konzentration der Säure ausreichend ist, so dass die Eudialytstruktur durch die Mineralsäure aufgebrochen wird und Silizium in eine unlösliche Form überführt wird. In einem weiteren Prozessschritt wird die Masse einer Laugung unterzogen, wobei das Laugungsmittel bevorzugt Wasser bzw. eine schwach saure Lösung ist. Anschließend wird der verbleibende Feststoff von dem Laugungsmittel getrennt. Durch die flüssige Mineralsäure, die zum Aufbruch der Eudialytstruktur führt, werden die in der Eudialytstruktur eingebetteten Selten-Erdelemente sowie gegebenenfalls Zirkonium freigesetzt und anschließend im Laugungsmittel gelöst. In dem Laugungsmittel, das nun von dem verbleibenden Feststoff abgetrennt ist, befindet sich nun eine erhöhte Konzentration an Selten-Erdelementen sowie eine noch geringe Konzentration von Silizium. Dieses so abgetrennte Laugungsmittel kann einer weiteren Prozessführung zur Gewinnung von Selten-Erdmetallen und deren Trennungsverfahren zugeführt werden. Das Versetzen des Minerals mit Mineralsäure und das anschließende Laugen wird auch als "Mauken" bezeichnet.

Gegebenenfalls kann es zweckmäßig sein, das Mineral vor dem Versetzen mit der Mineralsäure auf eine geeignete Partikelgröße zu verkleinern, wenn dies nicht bereits in einem vorangegangenen Prozessschritt geschehen ist. Grundsätzlich ist es zweckmäßig, dass die mit Säure versetzten Partikel kleiner als 5 cm sind. Ein Zerkleinerungsprozess, beispielsweise ein Mahlprozess ist energetisch aufwendig und er ist demnach dann zweckmäßig, wenn die Gesteinsform sich ansonsten nur unzureichend mit der Säure vermischt.

Es hat sich herausgestellt, dass konzentrierte Salzsäure, die mit einer Konzentration über 15 %, bevorzugt über 30 %, ganz besonders bevorzugt mindestens 36 %, besonders gut für das Aufbrechen des Eudialytminerals ohne eine Gelbildung geeignet ist. Ferner ist die Säure leicht zu handhaben und kostengünstig. Grundsätzlich sind als Mineralsäuren jedoch auch Schwefelsäure und Salpetersäure geeignet.

Ferner hat es sich als vorteilhaft herausgestellt, dass das Volumenverhältnis zwischen der Mineralsäure und dem gemahlenen Eudialyt zwischen 1:1 und 4:1, insbesondere zwischen 1,5:1 und 2,5:1 liegt. Mit diesem Volumenverhältnis bildet sich die entsprechende Masse heraus, in der die Reaktion zum Aufbrechen des Eudialytminerals besonders effektiv abläuft.

Ferner ist eine Einwirkzeit von mindestens 10 Minuten, bevorzugt mindestens 50 Minuten zweckmäßig.

Im Weiteren werden aus dem abgetrennten Laugungsmittel die darin gelösten Metallionen, insbesondere Selten-Erdelemente und Zirkonium gemäß dem Stand der Technik separiert.

Ferner ist es zweckmäßig, dass vor dem Versetzen des gemahlenen Eudialyts dieses einer Wärmebehandlung bei einer Temperatur zwischen 1000°C und 1400°C unterzogen wird, dabei bevorzugt zumindest teilweise aufschmilzt und anschließend ein Abschrecken des wärmebehandelten Eudialyts erfolgt. Auch dieser Verfahrensschritt führt dazu, dass die Bildung des Kieselgels verhindert wird, so dass die Überführung des Siliziums in Lösung unterdrückt wird. Es hat sich ferner herausgestellt, dass die gewünschte Wirkung zur Unterdrückung der Gelbildung verstärkt wird, wenn zunächst die Wärmebehandlung zwischen 1000°C und 1400°C mit dem anschließenden Abschrecken stattfindet, bevor die so wärmebehandelte Eudialytmineralmasse mit der Mineralsäure versetzt wird und anschließend gelaugt wird.

In einer bevorzugten Ausgestaltungsform der Erfindung wird das wärmebehandelte Eudialyt durch einen Luftstrahl abgeschreckt. Es kann jedoch auch zweckmäßig sein, den Behälter mit dem Eudialyt in ein Wasserbad oder in ein Ölbad zu tauchen, um das wärmebehandelte Material abzuschrecken.

Das Abschrecken des Eudialyts kann aber auch durch Aufsprühen des bei hohen Temperaturen schmelzflüssigen Eudialyts auf eine rotierende feuerfeste Scheibe erfolgen, wobei es anschließend zur Granulierung des Eudialyts kommt. Dies ist besonders zweckmäßig um einen zusätzlichen Mahlprozess während des gesamten Gewinnungsverfahrens von Seltenerdelement zu vermeiden, was energetisch- und kostengünstig ist.

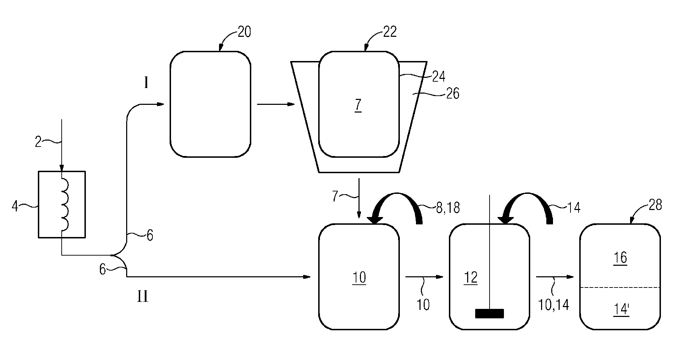

Weitere Merkmale der Erfindung und besondere Ausgestaltungsformen ergeben sich aus der nachfolgenden Figurenbeschreibung,

dabei zeigt

die einzige Figur eine schematische Darstellung der Abfolge der einzelnen Verfahrensschritte.

Im Folgenden sollen zunächst anhand der Figur die wesentlichen Verfahrensschritte des beschriebenen Verfahrens erläutert werden, bevor anschließend näher auf Einzelheiten der Verfahrensschritte eingegangen wird. Zunächst wird ein Eudialytmineral 2, das entweder aus konzentriertem Eudialyt oder aus Erz bestehen kann, das wiederum Eudialyt bevorzugt in größeren Konzentrationsmengen enthält, bestehen kann, in eine Mahlvorrichtung 4 gegeben, wobei das Mineral auf eine geeignete Korngröße, bevorzugt kleiner als 100 µm, besonders bevorzugt kleiner als 90 µm aufgemahlen wird. Das gemahlene Eudialyt 6 wird nun auf zwei alternativ mögliche Verfahrenswege gebracht. In der Route I erfolgt zunächst eine thermische Behandlung, die in einem Temperaturbereich zwischen 1000°C und 1400°C abläuft, wobei das Eudialyt dabei zumindest teilweise aufschmilzt. Bei dieser thermischen Behandlung 20 erfolgt bevorzugt ein Aufschmelzen des Minerals durch das das Eudialyt in seiner Struktur aufgebrochen wird und nach einem darauffolgenden Abschrecken 22 eine amorphe Struktur entsteht,. Das Abschrecken 22 kann in verschiedenen Versionen ablaufen, es kann je nach Materialmenge ein Pressluftstrom zweckmäßig sein, es kann jedoch auch zweckmäßig sein, wie es in der Figur dargestellt ist, dass ein Abschrecken in einem Ölbad 26 erfolgt, wobei ein Behälter 24 mit dem geschmolzenen Mineral in das Ölbad oder ein Wasserbad getaucht wird.

Ferner kann es auch zweckmäßig sein, dass ein Aufspritzen des geschmolzenen Minerals auf eine rotierende feuerfeste Scheibe zur Granulierung des Minerals erfolgt.

Im Anschluss dieses Abschreckprozesses 22, also nach der Wärmebehandlung 20, kann das wärmebehandelte Eudialyt 7 (alternativ dazu gemäß Route II auch das nicht wärmebehandelte Eudialyt 6) mit einer Mineralsäure 8, insbesondere in Form einer konzentrierten Salzsäure 18 zu einer Masse 10 vermischt werden. Dabei liegt ein Massenverhältnis von Salzsäure 18 zu Eudialyt 6 von 2:1 vor. Hierbei entsteht eine knetbare bröselige Masse, bei der jedoch im Wesentlichen jedes Korn des gemahlenen bzw. amorphen Eudialytmaterials 6, 7 mit oder von flüssiger Salzsäure 18 benetzt ist. Diese Masse 10 wird etwa eine Stunde in dieser Form belassen, bevor sie einem weiteren Prozessschritt, dem Laugen 12, zugeführt wird. Das Laugen 12 erfolgt durch die Zugabe eines Laugungsmittels 14, das in der Regel aus Wasser besteht. Das Laugen 12 kann grundsätzlich auch im selben Behälter erfolgen, in dem auch die Masse 10 mit der Salzsäure 18 versehen wird. Grundsätzlich ist auch zweckmäßig, das Mauken in einer Förderschnecke durchzuführen wodurch einen kontinuierlicher Prozess mit gleichzeitigem "Kneten" realisiert wird.

Beim Laugen 12 lösen sich die Wertstoffe, wie die Selten-Erdelemente sowie das Zirkonium in dem Laugungsmittel und es erfolgt im Weiteren ein Filtrieren 28, wobei nicht gelöster Feststoff 16 von dem Laugungsmittel 14, in dem sich die Wertstoffe befinden, abfiltriert wird. Das Laugungsmittel 14', in dem diese Wertstoffe, insbesondere Selten-Erdelemente gelöst sind, wird einem weiteren Selten-Erdelement-Aufbereitungsprozess, insbesondere einem Trennprozess, zugeführt.

Durch die beiden genannten alternativen Vorbehandlungsmethoden, zum einen der thermischen Behandlung 20 mit dem Abschrecken 22 und zum anderen dem Versetzen des Eudialyts 6, 7 mit konzentrierter Salzsäure 18, wird das Silizium aus dem nun vorliegenden Mineral stabilisiert und in fester Form im Rückstand, also dem verbleibenden Feststoff 16, gebunden. Grundsätzlich ist jede dieser beiden beschriebenen Vorbehandlungsmethoden, also das Aufschmelzen bzw. das Mauken geeignet, die Gelbildung zu unterbinden. Eine Kombination beider Verfahrensschritte ist jedoch besonders gut geeignet, um die Gelbildung ganz besonders zu reduzieren und die Ausbeute der Selten-Erdelemente zu erhöhen.

Der Aufschmelzvorgang bzw. die thermische Behandlung 20, die bei einer Temperatur zwischen 1000°C und 1400°C anfällt, ist relativ energieintensiv, daher bietet sich hier eine Wärmerückgewinnung an. Wenn die heiße Schmelze des Eudialyts mit einem Luftstrahl abgekühlt wird, wie dies in einer Ausgestaltungsform zweckmäßig ist, kann die entstehende warme Luft zum Vorwärmen des Eudialytmaterials 6 verwendet werden. Dadurch lässt sich der Energieaufwand für das Aufschmelzen reduzieren. Weiterhin kann für das Abkühlen der Schmelze ein sogenannter Schlackengranulator eingesetzt werden. Hierbei wird die Schmelze in die Gasphase verdüst und dabei abgekühlt. Es bildet sich ein Granulat, das direkt für den Mauk- oder Laugungsvorgang verwendet werden kann.

## Patentansprüche

1. Verfahren zum Aufschließen eines Eudialytminerals (2) umfassend folgende Schritte,
Versetzen des Eudialyts (6) mit einer flüssigen Mineralsäure (8), so dass eine Masse (10) entsteht, Einwirken der Mineralsäure auf das Eudialyt (10) für eine vorgegebene Zeit und anschließendes Laugen (12) der Masse (10) mit einem Laugungsmittel (14) und Trennen eines verbleibenden Feststoffes (16) vom Laugungsmittel (14').

2. Verfahren nach Anspruch 1, **dadurch gekennzeichnet, dass** die Mineralsäure (8) Salzsäure (18) ist, die insbesondere in einer Konzentration von über 15 % besonders bevorzugt von über 30 % vorliegt.

3. Verfahren nach Anspruch 1 oder 2, **dadurch gekennzeichnet, dass** das Volumen-Verhältnis zwischen der Mineralsäure (8)und dem gemahlenen Eudialyt (6) zwischen 1 zu 1 und 4 zu 1, insbesondere zwischen 1,5 zu 1 und 2,5 zu 1 liegt.

4. Verfahren nach einem der vorhergehenden Ansprüche, **dadurch gekennzeichnet, dass** das Einwirken mindestens 10 min, bevorzugt mindestens 50 min andauert.

5. Verfahren nach einem der vorhergehenden Ansprüche, **dadurch gekennzeichnet, dass** aus dem abgetrennten Laugungsmittel (14') darin gelöste Metallionen voneinander separiert werden.

6. Verfahren nach einem der vorhergehenden Ansprüche, **dadurch gekennzeichnet, dass** vor dem Versetzen des gemahlenen Eudialyts (6) mit der Mineralsäure (8) diese einer Wärmebehandlung (20) bei einer Temperatur zwischen 1000°C und 1400°C unterzogen wird und anschließend ein Abschrecken des wärmebehandelten Eudialyts (7) erfolgt.

7. Verfahren nach Anspruch 6, **dadurch gekennzeichnet, dass** das Eudialyt während der Wärmebehandlung (20) zumindest teilweise in geschmolzener Form vorliegt.

8. Verfahren nach Anspruch 6 oder 7, **dadurch gekennzeichnet, dass** das Abschrecken (22) durch einen Luftstrahl erfolgt.

9. Verfahren nach Anspruch 6 oder 7, **dadurch gekennzeichnet, dass** das Abschrecken (22) durch das Eintauchen eines Behälters (24) des wärmebehandelten Eudialyts (7) in ein Wasserbad oder in ein Ölbad (26) erfolgt.

10. Verfahren nach Anspruch 6 oder 7, **dadurch gekennzeichnet, dass** das Abschrecken (22) durch Aufbringen des Eudialyts, das in der Temperatur der Wärmebehandlung vorliegt, auf eine rotierende feuerfeste Scheibe erfolgt und dabei granuliert.
